# EUROPEAN PATENT SPECIFICATION

(11) **EP 2 863 449 B1**
(45) Date of publication and mention of the grant of the patent: **12.06.2019**
(21) Application number: 14152098.1
(22) Date of filing: 22.01.2014
(51) Int. Cl.: H01M 2/02, H01M 2/10, H01M 2/34, H01M 10/04, H01M 10/0525, H01M 10/0587

(54) **Secondary battery**
Sekundärbatterie
Batterie secondaire

(30) Priority: 16.10.2013 KR 20130123295
(43) Date of publication of application: 22.04.2015
(73) Proprietor: Samsung SDI Co., Ltd., Yongin-si, Gyeonggi-do (KR)
(72) Inventor: KIM, Daekyu, Gyeonggi-do (KR); CHO, Jieun, Gyeonggi-do (KR)
(74) Representative: Walaski, Jan Filip

(56) References cited:
- EP-A1- 2 254 187
- EP-A1- 2 267 830
- EP-A1- 2 273 601
- EP-A1- 2 375 472
- EP-A1- 2 477 252
- US-A1- 2006 251 962
- US-A1- 2013 202 932

## Description

The present invention relates to a secondary battery, particularly but not exclusively to a secondary battery which can prevent a short circuit while preventing impacts applied to an electrode assembly.

Rechargeable, or secondary, batteries are widely used in various applications including advanced electronic devices such as cellular phones, notebook computers, camcorders, and the like.

Lithium secondary batteries operating at 3.6 V are rapidly developing because their operating voltage is approximately three-times higher than that of nickelcadmium (Ni-Cd) batteries or nickel-hydride (Ni-MH) batteries which are widely used as power sources for electronic devices. Lithium secondary batteries also have excellent energy density per unit weight.

A lithium secondary battery generally employs a lithium oxide, as a positive active material, and a carbon material, as a negative active material. Such lithium secondary batteries may be classified as liquid electrolyte cells and polymer electrolyte cells based on the kind of electrolyte used. Lithium batteries using a liquid electrolyte are generally referred to as lithium-ion batteries, and lithium batteries using a polymer electrolyte are generally referred to as lithium-polymer batteries. Typically, lithium secondary batteries are manufactured in cylindrical, rectangular and pouch shapes.

In the lithium secondary battery, the electrode assembly is inserted into the case together with an electrolyte solution. Here, the electrode assembly is liable to damages due to external impacts. Accordingly, there is a demand for a safety device.

Aspects of the present invention provide a secondary battery, which can prevent a short circuit while preventing impacts applied to an electrode assembly.

EP2273601, EP2477252, EP2267830, and US2006/251962 relate to tape for a secondary battery.

According to an aspect of the present invention, there is provided a secondary battery according to claim 1. Optional features are set out in the dependent claims.

In accordance with an aspect of the present invention, there is provided a secondary battery comprising a case, an electrode assembly in the case, an electrolyte solution in the case and an insulating tape disposed between the case and the electrode assembly, the insulating tape comprising first and second layers wherein the first layer comprises an insulating and non-adhesive material and the second layer is more reactive to the electrolyte solution than the first layer.

By having one layer more reactive than the other layer, the more reactive layer can be used to fix the electrode assembly in position, while the less reactive layer provides the insulation.

The second layer may comprise a material that is arranged to react with the electrolyte solution to fix the electrode assembly to an inner surface of the case.

The insulating tape may further comprise a first adhesive layer between the first and second layers. The insulating tape may further comprise a second adhesive layer on an outer surface of the first layer. Alternatively, the first and second layers may be bound together by other means, such as lamination, with an adhesive layer on an outer surface of the first layer.

The or each adhesive layer may comprise an acrylic adhesive.

The or each adhesive layer may have a thickness of 4µm or less.

The first layer may comprise polyethylene PE. The second layer may comprise polystyrene PS or oriented polystyrene OPS.

The first layer may be formed on a side of the insulating tape facing the electrode assembly and the second layer may be formed on a side of the insulating tape facing the inner surface of the case.

The first layer may be between 5 µm and 7 µm thick.

The insulating tape may have an overall thickness of 10 µm or more.

The insulating tape may be wrapped around the bottom end of the electrode assembly, and may extend no more than one third of the way up the electrode assembly.

The insulating tape may be arranged along a termination line at which the winding of the electrode assembly ends to prevent the electrode assembly from being unwound.

As described above, the secondary battery according to an embodiment of the present invention includes a finishing tape wrapping up a winding line or a bottom end of an electrode assembly, the finishing tape including a first substrate made of polyethylene on its surface contacting the electrode assembly and a second substrate made of polystyrene or oriented polystyrene on its surface contacting the case, thereby preventing the electrode assembly from moving inside the case and preventing the electrode assembly and the case from being electrically short circuited.

According to a further aspect of the invention, there is provided a secondary battery comprising a case, an electrode assembly in the case, an electrolyte solution in the case and an insulating tape disposed between the case and the electrode assembly, the insulating tape comprising first and second layers, wherein the first layer comprises an insulating and non-adhesive material that is substantially unreactive to the electrolyte solution and the second layer comprises a material that is arranged to react with the electrolyte solution to fix the electrode assembly to an inner surface of the case.

According to a yet further aspect of the invention, there is provided a secondary battery comprising a case, an electrode assembly in the case, an electrolyte solution in the case and an insulating tape disposed between the case and the electrode assembly, the insulating tape comprising first and second layers, wherein the first layer comprises an insulating material that is substantially unreactive to the electrolyte solution and the second layer comprises a material that is arranged to react with the electrolyte solution to fix the electrode assembly to an inner surface of the case, the tape further comprising an adhesive layer between the first and second layers.

The objects, features and advantages of the present invention will be more apparent from the following detailed description in conjunction with the accompanying drawings, in which:
FIG. 1 is an exploded perspective view of a secondary battery according to an exemplary embodiment of the present invention;
FIG. 2 is a perspective view illustrating a structure in which a finishing tape is adhered to an electrode assembly in the secondary battery shown in FIG. 1;
FIG. 3 is a cross-sectional view illustrating a structure of a finishing tape in the secondary battery shown in FIG. 1; and
FIG. 4 is a cross-sectional view of the secondary battery shown in FIG. 1.

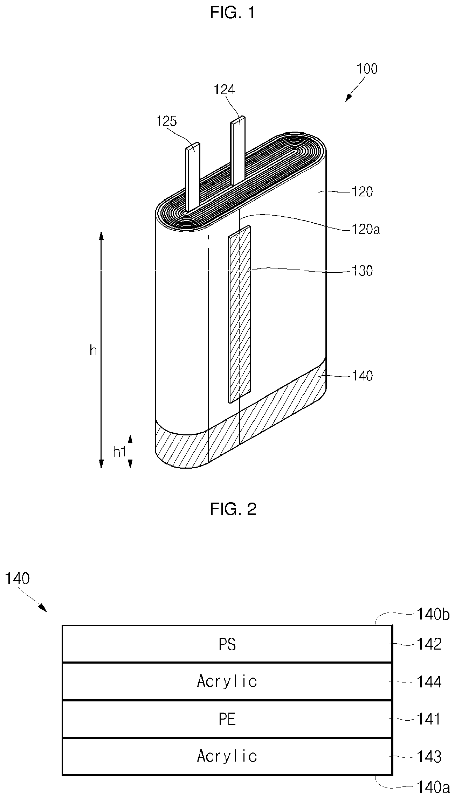

Referring to FIGS. 1 and 2, the secondary battery 100 according to the embodiment of the present invention includes a case 110, an electrode assembly 120, finishing tapes 130 and 140, and a cap assembly 150. In addition, an insulation case 160 may further be provided between the electrode assembly 120 and the cap assembly 150.

The case 110 is substantially hexahedral shaped. The case 110 has an internal space and a top opening 110a. The case 110 may be made of aluminum (Al), iron (Fe) or an alloy thereof. In addition, the inner surface of the case 110 may be subjected to insulation treatment. The case 110 may include a groove 111 formed along the top periphery, so that the insulation case 160 is to be placed in the groove 111. In addition, an electrolyte solution with the electrode assembly 120 may be accommodated in the space of the case 110. The electrolyte solution is an organic liquid containing a salt injected to allow lithium ions to move between positive and negative electrode plates of the electrode assembly 120, and may include a non-aqueous organic electrolyte solution having a lithium salt, such as LiPF₆, LiBF₄, or LiClO₄, and a high-purity organic solvent mixed therein, or a polymer electrolyte solution using a polymer electrolyte.

The electrode assembly 120 is accommodated in the space of the case 110. The electrode assembly 120 includes a positive electrode plate 121 coated with a positive active material (e.g., lithium cobalt oxide (LiCoO₂), a negative electrode plate 122 coated with a negative active material (e.g., graphite), and a separator 123 positioned between the positive electrode plate 121 and the negative electrode plate 122 to prevent an electric short and to allow lithium ions to move. The electrode assembly 120 is formed by winding a stacked structure of the positive electrode plate 121, the separator 123 and the negative electrode plate 122 multiple times in a substantially jelly-roll configuration. The positive electrode plate 121 may be made of aluminum (Al) foil, the negative electrode plate 122 may be made of a copper (Cu) foil, and the separator 123 may be made of polyethylene (PE) or polypropylene (PP).

In addition, an upwardly extending positive electrode lead 125 is connected to the positive electrode plate, and an upwardly extending negative electrode lead 124 is connected to the negative electrode plate. Here, the positive electrode lead 125 may be made of aluminum (Al), and the negative electrode lead 124 may be made of nickel (Ni).

As described above, the electrolyte solution is injected into the case 110. During charging and discharging, the electrolyte solution serves as a medium for moving lithium ions generated by an electrochemical reaction taking place between the positive electrode plate and the negative electrode plate within the battery.

The finishing tapes 130 and 140 may include a termination tape 130 formed along the termination line 120a at which winding of the electrode assembly 120 ends, and a bottom tape 140 wrapping up a bottom end of the electrode assembly 120.

The electrode assembly 120 is wound in a circular configuration with the separator interposed between the positive electrode plate and the negative electrode plate, and the termination tape 130 is attached along the termination line 120a at which winding of the electrode assembly 120 ends, as shown, thereby fixing the electrode assembly 120. The termination tape 130 is fixedly compressed to prevent the electrode assembly 120 from being unwound, thereby allowing the electrode assembly 120 to be easily placed in the case 110. The termination tape 130 may have the same structure as the conventional tape. However, the termination tape 130 may have the same structure as the bottom tape 140 as selected by one skilled in the art.

The bottom tape 140 is configured to entirely wrap up the bottom end of the electrode assembly 120 to be positioned between the electrode assembly 120 and the case 110. The bottom tape 140 reacts with the electrolyte solution accommodated in the case 110 to be modified to have adhesiveness, thereby fixing the electrode assembly 120 into the case 110 to prevent the electrode assembly 120 from moving in the case 110. In addition, the bottom tape 140 prevents the bottom end of the electrode assembly 120 from making direct contact with the case 110, thereby preventing an electrical short.

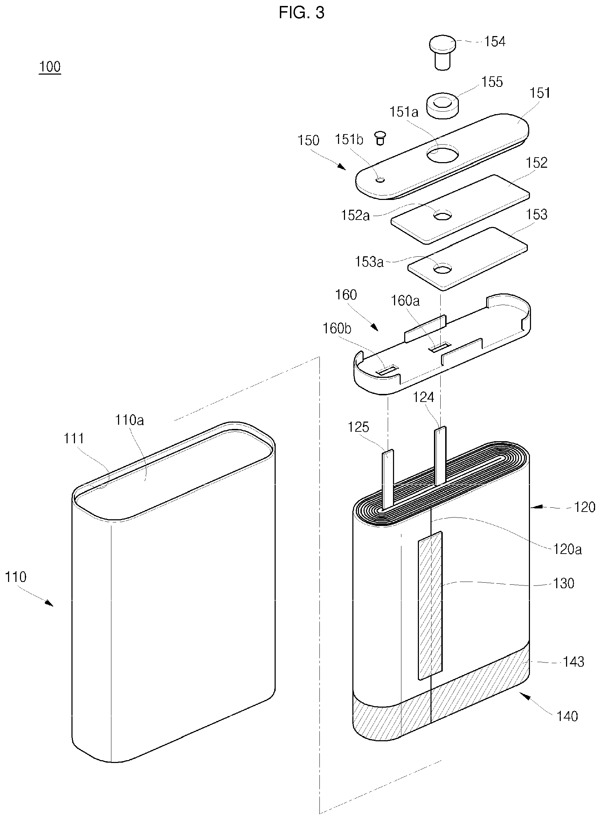

In more detail, the bottom tape 140 is configured as shown in FIG. 3. In the bottom tape 140, a first substrate 141 is formed on one surface 140a attached to the electrode assembly 120, and a second substrate 142 is formed on the other surface 140b attached to the case 110.

The first substrate 141 does not react with the electrolyte solution so as not to be dissolved, and forms a base film. In detail, the first substrate 141 may be made of polyethylene (PE). Therefore, the first substrate 141 prevents the electrode assembly 120 from making direct contact with the case 110, thereby preventing an electrical short from occurring in the secondary battery 100.

Meanwhile, the second substrate 142 reacts with the electrolyte solution to be modified to have adhesiveness. The second substrate 142 may be made of polystyrene (PS) or oriented PS. After the second substrate 142 reacts with the electrolyte solution, the first substrate 141 as a base film is adhered to the case 110, thereby preventing the electrode assembly 120 from moving in the case 110. Therefore, it is possible to prevent the electrode assembly 120 from being damaged due to external impacts.

Other suitable materials may be used, with the proviso that the second substrate is more reactive to the electrolyte solution than the first substrate.

In addition, the bottom tape 140 may include a first adhesive layer 143 to attach the first substrate 141 to the electrode assembly 141 and a second adhesive layer 144 to attach the first substrate 141 and the second substrate 142 to each other. The first and second adhesive layer 144 may be made of acryl.

Therefore, the secondary battery 100 according to the embodiment of the present invention includes the first substrate 141 made of polyethylene (PE) on the bottom tape 140, of the finishing tapes 130 and 140, and the second substrate 142 made of polystyrene (PS) or oriented PS, thereby preventing an electrical short between the electrode assembly 120 and the case 110 while preventing the electrode assembly 120 from moving.

In addition, considering that the electrolyte solution is impregnated, the first substrate 141 is preferably positioned in the electrode assembly 120 and the second substrate 142 is preferably positioned to face the inner surface of the case 110. However, according to selection by one skilled in the art, positions of the first substrate 141 and the second substrate 142 may be changed.

The entire thickness of the bottom tape 140 is preferably set to 10µm or greater. If the thickness of the bottom tape 140 is 10µm or greater, the bottom tape 140 can advantageously prevent the electrode assembly 120 from moving by fixing the position of the electrode assembly 120. In addition, the bottom tape 140 can advantageously prevent an electrical short between the electrode assembly 120 and the case 110 by securing an appropriate thickness of the bottom tape 140.

In addition, in the bottom tape 140, the first substrate 141 may be formed to have a thickness in a range of 5 µm to 7 µm. If the thickness of the first substrate 141 is 5 µm or greater, reliability in the insulating performance between the electrode assembly 120 and the case 110 using the first substrate 141 can be maintained. In addition, if the thickness of the first substrate 141 is 7 µm or less, the capacity of the secondary battery 100 can be advantageously achieved by increasing the capacity of the electrode assembly 120.

In addition, each of the first adhesive layer 143 and the second adhesive layer 144 may have a thickness set to 4 µm or less. Since the first adhesive layer 143 and the second adhesive layer 144 are formed to have minimum thicknesses so long as they can be coated, lower limits of the first adhesive layer 143 and the second adhesive layer 144 are not separately defined. If the thickness of each of the first adhesive layer 143 and the second adhesive layer 144 is 4 µm or less, the capacity of the secondary battery 100 can be advantageously achieved by increasing the capacity of the electrode assembly 120.

Meanwhile, a height hi of the bottom tape 140 is preferably one third (1/3) of a height h of the electrode assembly 120. If the height hi of the bottom tape 140 is less than one third (1/3) of the height h of the electrode assembly 120, the capacity of the electrode assembly 120 can be advantageously obtained, and ion exchange based on the electrolyte solution can be advantageously achieved.

The cap assembly 150 is coupled to a top portion of the can 110. The cap assembly 150 includes a cap plate 151, an insulation plate 152, a terminal plate 153, an electrode terminal 154, an insulation gasket 155 and a plug 156.

The cap plate 151 is coupled to the opening of the can 110 and is shaped of a plate having long sides and short sides. In a state in which the cap plate 151 is coupled to the opening of the can 110, the periphery of the cap plate 151 is welded to seal the can 110. The cap plate 151 has a hole 151a to couple the electrode terminal 154 and an injection hole 151b to inject the electrolyte solution.

The insulation plate 152 is positioned at a lower portion of the cap plate 151. The insulation gasket 155 is coupled to a hole 152a of the insulation plate 152. In addition, the lower portion of the electrode terminal 154 penetrates the hole 152a of the insulation plate 152.

The terminal plate 153 is positioned at a lower portion of the insulation plate 152. The electrode terminal 154 is coupled to a hole 153a of the terminal plate 153, and the electrode terminal 154 is electrically connected to the negative electrode lead 124.

A lower portion of the electrode terminal 154 protrudes to then penetrate the cap plate 151 and the insulation plate 152 to be electrically connected to the negative electrode lead 124. The insulation gasket 155 is positioned between the electrode terminal 154 and the cap plate 151, thereby preventing the electrode terminal 154 from electrically contacting the cap plate 151.

The plug 156 is formed to correspond to an electrolyte injection hole of the cap plate 151. Once the electrolyte solution is injected, the plug 156 is fixedly seal by the cap plate 151, thereby preventing the electrolyte solution from leaking.

The insulation case 160 is coupled to a top portion of the electrode assembly 120, that is, the opening 110a of the can 110. In more detail, the insulation case 160 may be coupled to a step 111 of the can 110. Lead passing holes 160a and 160b are formed in the insulation case 160 to allow the negative electrode lead 124 and the positive electrode lead 125 to penetrate.

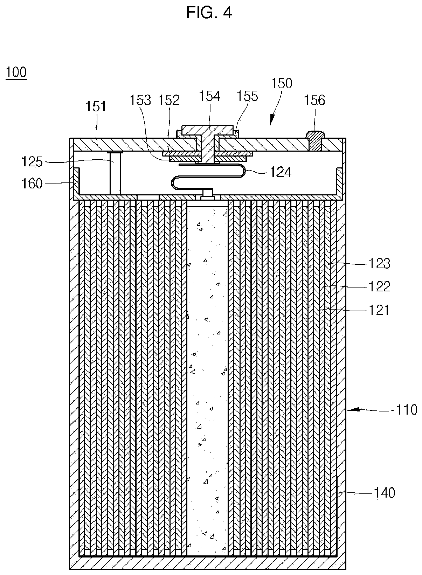

FIG. 4 is a cross-sectional view of the secondary battery shown in FIG. 1.

Referring to FIG. 4, in the secondary battery 100 including a finishing tape according to an embodiment of the present invention, the electrode assembly 120 is accommodated in the case 110. In addition, the bottom tape 140 is positioned between the bottom end of the electrode assembly 120 and the case 110.

In addition, although not separately shown, as described above, in the bottom tape 140, the first tape 141 is adhered to the electrode assembly 120, thereby preventing the electrode assembly 120 and the case 110 from being electrically short circuited.

In addition, as described above, the second tape 142 is adhered to the case 110, thereby preventing the electrode assembly 120 from moving in the case 110.

Although embodiments of the present invention have been described in detail hereinabove, it should be understood that many variations and modifications of the embodiments, which may appear to those skilled in the art, will still fall within the scope of the invention as defined by the appended claims.

## Claims

1. A secondary battery comprising:
a case (no);
an electrode assembly (120) in the case;
an electrolyte solution in the case; and
an insulating tape (130, 140) disposed between the case and the electrode assembly, the insulating tape comprising first and second layers (141, 142), wherein the first layer (141) comprises an insulating and non-adhesive (141) material and the second layer (142) is more reactive to the electrolyte solution than the first layer, and wherein the insulating tape comprises:
a first tape (140) wrapped around the bottom end of the electrode assembly, wherein the first tape extends no more than one third of the way up the electrode, and
a second tape (130) arranged along a termination line (120a) at which the winding of the electrode assembly ends to prevent the electrode assembly from being unwound, wherein a first gap exists between a first end of the second tape (130) and the top of the electrode assembly and a second gap exists between a second end of the second tape (130) and an uppermost edge of the first tape (140),
wherein the first layer (141) of the first tape (140) surrounds a bottom surface of the electrode assembly and a side surface of the electrode assembly adjacent to the bottom surface simultaneously,
wherein the second layer (142) of the first tape (140) is in direct contact with an inner bottom surface of the case and an inner side surface of the case adjacent to the inner bottom surface simultaneously, and wherein the second layer comprises a material that is arranged to react with the electrolyte solution to fix the electrode assembly to an inner surface (110a) of the case.

2. The secondary battery according to claim 1, wherein the insulating tape further comprises a first adhesive layer (144) between the first and second layers (141, 142).

3. The secondary battery according to claim 1 or claim 2, wherein the insulating tape further comprises an adhesive layer (143) on an outer surface of the first layer (141).

4. The secondary battery according to claim 3, wherein the or each adhesive layer comprises an acrylic adhesive.

5. The secondary battery according to claim 3 or claim 4, wherein the or each adhesive layer has a thickness of 4 µm or less.

6. The secondary battery according to any one of the preceding claims, wherein the first layer (141) comprises polyethylene PE.

7. The secondary battery according to any one of the preceding claims, wherein the second layer (142) comprises polystyrene PS or oriented polystyrene OPS.

8. The secondary battery according to any one of the preceding claims, wherein the first layer is between 5 µm and 7 µm thick.

9. The secondary battery according to any one of the preceding claims, wherein the insulating tape has a thickness of 10 µm or more.

## Patentansprüche

1. Sekundärbatterie, umfassend:
ein Gehäuse (110);
eine Elektrodenanordnung (120) in dem Gehäuse;
eine Elektrolytlösung in dem Gehäuse; und
ein zwischen dem Gehäuse und der Elektrodenanordnung angeordnetes Isolierband (130, 140), wobei das Isolierband erste und zweite Schichten (141, 142) umfasst, wobei die erste Schicht (141) ein isolierendes und nichthaftendes (141) Material umfasst und die zweite Schicht (142) stärker auf die Elektrolytlösung reagiert als die erste Schicht, und
wobei das Isolierband umfasst:
ein erstes Band (140), das um das untere Ende der Elektrodenanordnung gewickelt ist, wobei das erste Band sich nicht mehr als ein Drittel des Weges die Elektrode hoch erstreckt, und
ein zweites Band (130), das entlang einer Abschlussleitung (120) angeordnet ist, an der die Wicklung der Elektrodenanordnung endet, um zu vermeiden, dass die Elektrodenanordnung abgewickelt wird, wobei ein erster Zwischenraum zwischen einem ersten Ende des zweiten Bandes (130) und der Oberseite der Elektrodenanordnung gebildet ist und ein zweiter Zwischenraum zwischen einem zweiten Ende des zweiten Bandes (130) und einer obersten Seite des ersten Bandes (140) gebildet ist,
wobei die erste Schicht (141) des ersten Bandes (140) zugleich eine untere Oberfläche der Elektrodenanordnung und eine Seitenfläche der Elektrodenanordnung benachbart zu der unteren Oberfläche umschließt,
wobei die zweite Schicht (142) des ersten Bandes (140) zugleich in direktem Kontakt mit einer inneren unteren Oberfläche des Gehäuses und einer inneren Seitenfläche des Gehäuses benachbart zu der inneren unteren Oberfläche steht, und wobei die zweite Schicht ein Material umfasst, dass dazu angeordnet ist, mit der Elektrolytlösung zu reagieren, um die Elektrodenanordnung an eine innere Oberfläche (110a) des Gehäuses zu befestigen.

2. Sekundärbatterie nach Anspruch 1, wobei das Isolierband ferner eine erste Haftschicht (144) zwischen den ersten und zweiten Schichten (141, 142) umfasst.

3. Sekundärbatterie nach Anspruch 1 oder Anspruch 2, wobei das Isolierband ferner eine erste Haftschicht (143) auf einer äußeren Oberfläche der ersten Schicht (141) umfasst.

4. Sekundärbatterie nach Anspruch 3, wobei die oder jede Haftschicht einen Acrylklebstoff umfasst.

5. Sekundärbatterie nach Anspruch 3 oder Anspruch 4, wobei die oder jede Haftschicht eine Dicke von 4 µm oder weniger aufweist.

6. Sekundärbatterie nach einem der vorangehenden Ansprüche, wobei die erste Schicht (141) Polyethylen PE umfasst.

7. Sekundärbatterie nach einem der vorangehenden Ansprüche, wobei die zweite Schicht (142) Polystyrol PS oder orientiertes Polystyrol umfasst.

8. Sekundärbatterie nach einem der vorangehenden Ansprüche, wobei die erste Schicht (141) eine Dicke zwischen 5 µm und 7 µm aufweist.

9. Sekundärbatterie nach einem der vorangehenden Ansprüche, wobei das Isolierband eine Dicke von 10 µm oder mehr aufweist.

## Revendications

1. Batterie secondaire comprenant :
un boîtier (110) ;
un ensemble d'électrodes (120) dans le boîtier ;
une solution électrolytique dans le boîtier ; et
une bande isolante (130, 140) disposée entre le boîtier et l'ensemble d'électrodes, la bande isolante comprenant des première et deuxième couches (141, 142), où la première couche (141) comprend un matériau isolant et non adhésif (141) et la deuxième couche (142) est plus réactif à la solution électrolytique que la première couche, et où la bande isolante comprend :
une première bande (140) enroulée autour de l'extrémité inférieure de l'ensemble d'électrodes, où la première bande ne s'étend pas sur plus d'un tiers du chemin jusqu'à l'électrode, et
une deuxième bande (130) agencée le long d'une ligne de terminaison (120a) au niveau de laquelle l'enroulement de l'ensemble d'électrodes se termine pour empêcher le déroulement de l'ensemble d'électrodes, où un premier intervalle existe entre une première extrémité de la deuxième bande (130) et la partie supérieure de l'ensemble d'électrodes et un deuxième intervalle existe entre une deuxième extrémité de la deuxième bande (130) et un bord le plus en haut de la première bande (140),
dans laquelle la première couche (141) de la première bande (140) entoure une surface inférieure de l'ensemble d'électrodes et une surface latérale de l'ensemble d'électrodes adjacente à la surface inférieure simultanément,
dans laquelle la deuxième couche (142) de la première bande (140) est en contact direct avec une surface inférieure interne du boîtier et une surface latérale interne du boîtier adjacente à la surface inférieure interne simultanément, et où la deuxième couche comprend un matériau qui est agencé pour réagir avec la solution électrolytique afin de fixer l'ensemble d'électrodes à une surface interne (110a) du boîtier.

2. Batterie secondaire selon la revendication 1, dans laquelle la bande isolante comprend en outre une première couche adhésive (144) entre les première et deuxième couches (141, 142).

3. Batterie secondaire selon la revendication 1 ou 2, dans laquelle la bande isolante comprend en outre une couche adhésive (143) sur une surface externe de la première couche (141).

4. Batterie secondaire selon la revendication 3, dans laquelle la ou chaque couche adhésive comprend un adhésif acrylique.

5. Batterie secondaire selon la revendication 3 ou 4, dans laquelle la ou chaque couche adhésive a une épaisseur inférieure ou égale à 4 pm.

6. Batterie secondaire selon l'une quelconque des revendications précédentes, dans laquelle la première couche (141) comprend du polyéthylène PE.

7. Batterie secondaire selon l'une quelconque des revendications précédentes, dans laquelle la deuxième couche (142) comprend du polystyrène PS ou du polystyrène orienté OPS.

8. Batterie secondaire selon l'une quelconque des revendications précédentes, dans laquelle la première couche a une épaisseur comprise entre 5 µm et 7 µm.

9. Batterie secondaire selon l'une quelconque des revendications précédentes, dans laquelle la bande isolante a une épaisseur supérieure ou égale à 10 µm.
